# EUROPÄISCHE PATENTSCHRIFT

(11) **EP 3 689 130 B1**
(45) Veröffentlichungstag und Bekanntmachung des Hinweises auf die Patenterteilung: **16.11.2022**
(21) Anmeldenummer: 20153562.2
(22) Anmeldetag: 24.01.2020
(51) Int. Cl.: A01D 82/02, A01D 43/08, A01D 43/10

(54) **FELDHÄCKSLER MIT KONDITIONIERWALZEN**
FORAGE HARVESTER WITH CONDITIONING ROLLERS
RÉCOLTEUSE-HACHEUSE AVEC ROULEAUX DE CONDITIONNEMENT

(30) Priorität: 29.01.2019 DE 102019201116
(43) Veröffentlichungstag der Anmeldung: 05.08.2020
(73) Patentinhaber: Deere & Company, Moline, IL 61265 (US)
(72) Erfinder: Gross, Stefan, 68163 Mannheim (DE); Frenzel, Maximilian, 68163 Mannheim (DE); Engel, Manfred, 68163 Mannheim (DE); Mclawhorn, Patrick, 68163 Mannheim (DE)
(74) Vertreter: Holst, Sönke

(56) Entgegenhaltungen:
- CZ-U1- 6 611
- DE-A1- 19 505 210
- US-A- 4 150 524
- US-B1- 6 346 067

## Beschreibung

Die Erfindung betrifft einen Feldhäcksler nach dem Oberbegriff des Anspruchs 1.

### Stand der Technik

Feldhäcksler dienen zur Ernte von ganzen Pflanzen oder ihren Teilen, die im Betrieb mittels eines Erntevorsatzes von einem Feld aufgenommen, durch Vorpresswalzen zusammengedrückt und einer Messertrommel zugeführt werden, deren Häckselmesser die Pflanzen im Zusammenwirken mit einem Gegenmesser zerschneiden. Anschließend werden die zerschnittenen Pflanzen oder-teile optional einer Konditioniereinrichtung zugeführt und durch eine Nachbeschleunigungseinrichtung in einen Auswurfkrümmer gefördert, der sie auf ein Transportfahrzeug überlädt. Die geernteten Pflanzen dienen in der Regel als Viehfutter oder zur Biogaserzeugung. Die Konditioniereinrichtung umfasst üblicherweise zwei oder mehr gegensinnig angetriebene Walzen, die durch eine Federkraft gegeneinander vorgespannt sind und zwischen denen das Häckselgut hindurchgeführt wird. Sie wird bei der Maisernte verwendet, um die im Häckselgut enthaltenen Körner anzuschlagen und die Verdaulichkeit des Futters zu verbessern.

Eine übliche Ausführungsform einer Konditioniereinrichtung findet sich in der EP 2 098 110 A2, die zwei zusammenwirkende Konditionierwalzen mit um ihren Umfang verteilten, sich in axialer Richtung über die Breite der Konditionierwalzen erstreckenden Zähnen zeigt. Derartige Zähne sind im Stand der Technik sägezahnförmig oder als symmetrisches Dreieck ausgeführt (Prospekt "Krone Big X 750 C Precision-chop forage harvester", Druckvermerk 06.14). Gemäß der als gattungsbildend angesehenen WO 2015/075157 A1 können die Zähne in sich flache, äußere Abschnitte umfassen, die sich in Umfangsrichtung erstrecken und eine vorbestimmte Breite aufweisen. Dadurch sollen die Standzeit der Zähne verlängert werden, denn auch nach gewisser Betriebsdauer und dem darauf resultierenden Verschleiß der Zähne verbleiben noch Teile der Zähne, die sich hinreichend weit vom Mantel der Konditionierwalze nach außen erstrecken, um das Erntegut zu bearbeiten.

Die DE 195 05 210 A1 beschreibt eine Konditionierwalze für einen Feldhäcksler mit um den Umfang verteilten, austauschbaren Segmenten, welche in schwalbenschwanzförmigen Führungen gelagert sind, um die Segmente im Verschleiß- oder Beschädigungsfall austauschen zu können. Jedes Segment trägt zwei gleichartige Zähne mit dreieckigem Querschnitt, die auf einem etwa rechteckigen Sockel sitzen. Im zusammengebauten Zustand folgt somit auf eine nachlaufende, abfallende Flanke eines nachlaufenden Zahns eines ersten Segments die vorlaufende, ansteigende Flanke eines vorlaufenden Zahns eines zweiten Segments, wobei alle Flanken gleichartig sind und somit die Vertiefungen zwischen benachbarten Zähnen gleichartig sind, unabhängig davon, ob die benachbarten Zähne auf einem gemeinsamen Segment oder benachbarten Segmenten angeordnet sind.

### Aufgabe

Bei den gezahnten Konditionierwalzen ist in Umfangsrichtung lediglich eine einzige Spitze je Zahn vorgesehen, die mit dem Erntegut und insbesondere den darin enthaltenen Körnern zusammenwirkt. Die Wirkung der Zähne auf das Erntegut ist somit auf eine einzige Schnittaktion je Zahn begrenzt. Es wäre wünschenswert, die Wirkung der Konditionierwalze zu verbessern.

### Lösung

Dieses Problem wird erfindungsgemäß durch die Lehre des Patentanspruches 1 gelöst, wobei in den weiteren Patentansprüchen Merkmale aufgeführt sind, die die Lösung in vorteilhafter Weise weiterentwickeln.

Ein Walzenmantel einer stromab einer Häckseltrommel eines Feldhäckslers angeordneten Konditionierwalze weist (im ungebrauchten Neuzustand) eine Anzahl um seinen Umfang verteilter, sich in axialer Richtung oder wendelförmig erstreckender Zähne auf, die jeweils eine in Umfangsrichtung vorlaufende, in radialer Richtung nach außen ansteigende Flanke, eine in Umfangsrichtung nachlaufende, in radialer Richtung nach innen abfallende Flanke und dazwischen einen äußeren, sich entlang der Umfangsrichtung erstreckenden Bereich umfassen, wobei der äußere Bereich der Zähne einer oder beider Konditionierwalzen wenigstens eine (konkave) Vertiefung und/oder wenigstens eine Stufe beinhaltet, deren radiale Abmessung kleiner als die radiale Abmessung der Flanken ist.

Es wird demnach vorgeschlagen, den radial äußeren Bereich der Zähne, der sich in Umfangsrichtung zwischen den beiden Flanken befindet und in radialer Richtung am weitesten vom eigentlichen Walzenmantel beabstandet ist, bei der Herstellung des Walzenmantels mit einer eigenen Verzahnung auszustatten, die als (eine oder mehrere) Stufe und/oder konkave Vertiefung ausgeführt werden kann. Auf diese Weise erhält man eine Art Doppelschneide oder Doppelklinge (in Form der beiden am Ende der Vertiefung verbleibenden Höcker) oder zusätzliche Kante (in Form der Stufe), die ein weiteres Mal quetschend und/oder schneidend mit dem Erntegut zusammenwirkt und insbesondere die darin enthaltenen Körner in größerem Maße anschlägt oder zerkleinert als bisherige Zahnformen. Die Standzeit wird durch den äußeren Bereich gegenüber bisherigen Zahnformen mit dreieckigem oder sägezahnförmigem Querschnitt verlängert und man erhält ein dauerhaft kontinuierliches Spaltmaß zwischen benachbarten Konditionierwalzen. Zudem erhält man durch den äußeren Bereich eine erhöhte Eingriffslänge, über welche die Zähne mit dem Erntegut zusammenwirken und größere Reibungseffekte. Schließlich kann man durch die zusammenwirkenden Walzenmäntel Nachschärfungseffekte der Zähne erzielen.

Die Vertiefung kann einen rechteckigen oder trapezförmigen oder bogenförmigen oder dreieckigen oder sägezahnartigen Querschnitt oder eine beliebige Kombination dieser Querschnitte aufweisen.

Der äußere Bereich kann zwei in Umfangsrichtung betrachtet äußere Höcker umfassen, zwischen denen die Vertiefung angeordnet ist und die Außenflächen der äußeren Höcker können in Umfangsrichtung in sich flach oder spitz sein.

Die Höcker können zueinander symmetrisch oder unsymmetrisch sein. Insbesondere kann der vorlaufende Höcker höher oder niedriger und/oder breiter oder schmaler und/oder spitzer oder stumpfer als der nachlaufende Höcker sein.

Die vorlaufende und nachlaufende Flanke können einen Stumpf eines Dreiecks oder Sägezahns oder Rechtecks bilden.

Zumindest einer der Zähne des Walzenmantels kann mit einer Verschleißmarkierung versehen sein, die insbesondere als Kerbe ausgeführt sein kann.

### Ausführungsbeispiel

In den Zeichnungen ist sind mehrere, nachfolgend näher beschriebene Ausführungsbeispiele der Erfindung dargestellt. Es zeigen:
- Fig. 1: einen Feldhäcksler in einer schematischen Seitenansicht,
- Fig. 2: eine perspektivische Ansicht zweier Konditionierwalzen, und
- Fig. 3 bis 9: Querschnitte durch unterschiedliche Ausführungsformen der Zähne von Konditionierwalzen.

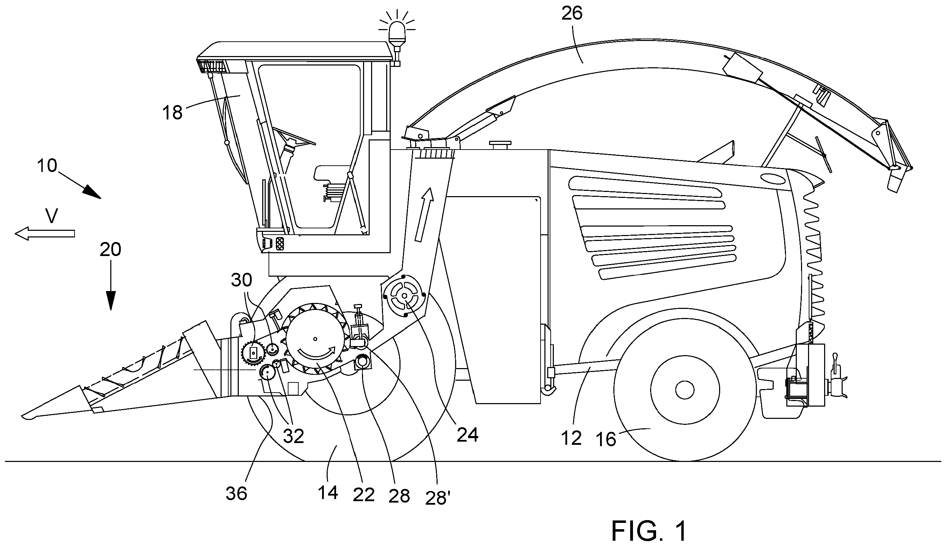

Ein in der Figur 1 gezeigter selbstfahrender Feldhäcksler10 baut sich auf einem Rahmen 12 auf, der von angetriebenen vorderen Rädern 14 und lenkbaren rückwärtigen Rädern 16 getragen wird. Die Bedienung des Feldhäckslers 10 erfolgt von einer Fahrerkabine 18 aus, von der aus ein zur Ernte stängelartiger Pflanzen geeigneter Erntevorsatz 20 einsehbar ist. Mittels des Erntevorsatzes 20, der in der dargestellten Ausführungsform ein reihenunabhängig arbeitendes Maisgebiss ist, vom Boden aufgenommenes Gut, z. B. Mais, Getreide oder dergleichen, wird durch obere Vorpresswalzen 30 und untere Vorpresswalzen 32 einer Häckseltrommel 22 zugeführt, die es in kleine Stücke häckselt und es einer Fördervorrichtung 24 aufgibt. Das Gut verlässt den Feldhäcksler 10 zu einem nebenher fahrenden Anhänger über eine in ihrer Position verstellbare Austrageinrichtung 26. Zwischen der Häckseltrommel 22 und der Fördervorrichtung 24 erstreckt sich eine Konditioniereinrichtung mit zwei Konditionierwalzen 28, 28', durch die das zu fördernde Gut der Fördervorrichtung 24 tangential zugeführt wird. Im Folgenden beziehen sich Richtungsangaben - wenn nicht anders erwähnt -, wie vorn, hinten, links und rechts auf die Vorwärtsrichtung V des Feldhäckslers 10, die in der Figur 1 von rechts nach links verläuft.

Zwischen der Erntegutaufnahmevorrichtung 20 und der Häckseltrommel 22 wird das Gut durch einen Einzugsförderer mit unteren Förderwalzen 32 und oberen Förderwalzen 30 transportiert, die innerhalb eines Einzugsgehäuses 36 angebracht sind. Die Förderwalzen 30, 32 werden auch als Vorpresswalzen bezeichnet, da die oberen Förderwalzen 30 durch Federkraft gegen die unteren Förderwalzen 32 vorgespannt sind, damit das Erntegut zwischen den Förderwalzen 30, 32 vorverdichtet wird und besser geschnitten werden kann. Die um den Umfang der Häckseltrommel 22 verteilten Häckselmesser wirken mit einer Gegenschneide zusammen, um das Gut zu häckseln.

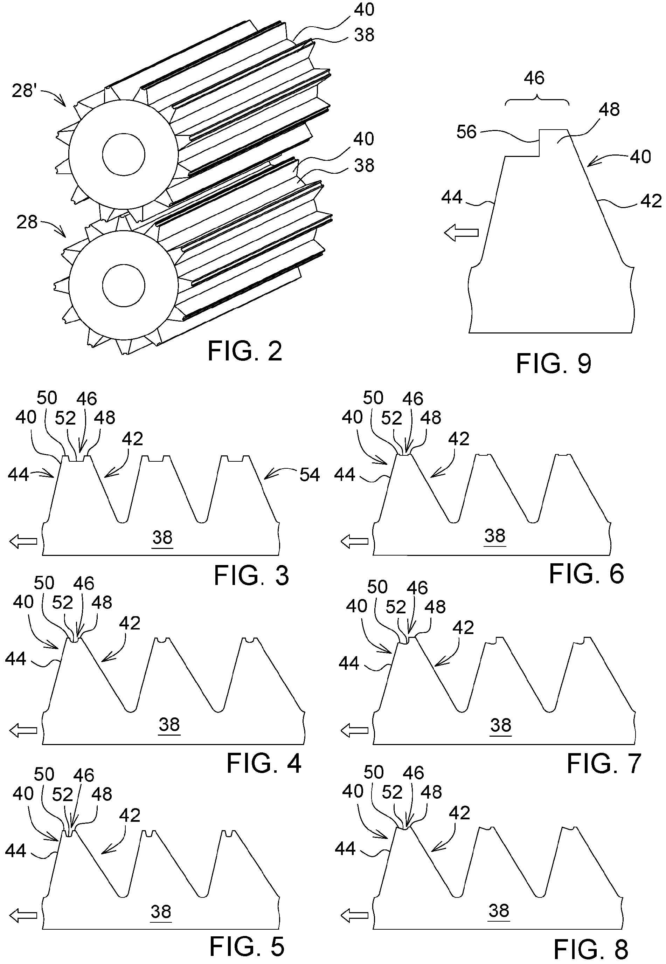

Die Figur 2 zeigt eine perspektivische Ansicht der Konditionierwalzen 28, 28', die jeweils einen Walzenmantel 38 umfassen, der durch an sich bekannte Stützscheiben, Achsstummel und Lagerungen drehbar am Rahmen 12 abgestützt ist und im Erntebetrieb durch einen geeigneten Antrieb (nicht gezeigt) um seine Mittelachse in Drehung versetzbar ist, wobei die beiden Konditionierwalzen 28, 28' mit relativ zueinander unterschiedlichen Umfangsgeschwindigkeiten angetrieben werden können und durch Federkraft (und/oder Hydraulikzylinder) gegeneinander vorgespannt sind.

Die Walzenmäntel 38 umfassen jeweils eine Anzahl um ihren Umfang verteilte, jeweils gleichartige Zähne 40, die in den Figuren 2 bis 9 im Neuzustand gezeigt sind. Die Zähne 40 erstrecken sich in den dargestellten Ausführungsformen jeweils über die gesamte axiale Länge der Walzenmäntel 38 in axialer Richtung, obwohl es auch denkbar wäre, sie nur jeweils über einen Teil der axialen Länge der Walzenmäntel 38 verlaufen zu lassen, d.h. zwischen in axialer Richtung benachbarten Zähnen senkrechte oder schräge Nuten vorzusehen, wie in der DE 10 2011 084 443 B3 gezeigt. Die Zähne zusammenwirkender Walzen können in axialer Richtung versetzt sein, sodass die Zähne einer der Walzen in die Nuten der anderen Walze eindringen. Anders als in der Figur 2 gezeigt, können die Zähne 40, anstatt genau axial zu verlaufen, spiral- oder wendeiförmig um den Walzenmantel 38 gelegt sein (s. EP 3 417 693 A1).

Der Abstand in Umfangsrichtung aufeinander folgender Zähne 40 entspricht größenordnungsmäßig dem Durchmesser der anzuschlagenden Körner.

Die Zähne 40 umfassen, wie in den Figuren 3 bis 9 gezeigt, jeweils vorlaufende Flanken 44, nachlaufende Flanken 42 und einen dazwischen liegenden, radial äußeren Bereich 46. In den Figuren 3 bis 8 sind die nachlaufenden Flanken 42 weniger steil als die vorlaufenden Flanken 44, d.h. die Flanken 42, 44 bilden einen Stumpf eines Sägezahnes, dem aufgrund des sich im Wesentlichen im Umfangsrichtung erstreckenden, äußeren Bereichs 46 die Spitze fehlt. Anstelle der gezeigten Sägezahnstumpfform könnten die Flanken 42, 44 auch einen Stumpf eines gleichseitigen Dreiecks oder eines Rechtecks bilden oder sich genau radial erstrecken. Die Drehrichtung der Walzenmäntel 38 der Figuren 3 bis 9 ist nach links gerichtet, obwohl sie auch nach rechts gerichtet sein könnte, d.h. man könnte die vor- und nachlaufenden Flanken 44, 42 vertauschen.

Der äußere Bereich 46 ist bei der Ausführungsform nach Figur 3 nicht in sich flach, sondern umfasst eine Vertiefung 52, die zwischen zwei Höckern 48, 50 angeordnet ist. Die Vertiefung 52 hat einen trapezförmigen (badewannenartigen) Querschnitt, d.h. die in Umfangsrichtung gemessene Abmessung der Vertiefung 52 ist an ihrem Grund kleiner als an ihrem radial äußeren Ende. Der Querschnitt der Vertiefung 52 könnte jedoch auch rechteckig sein. Die Höcker 48, 50 haben auch einen trapezförmigen Querschnitt, wobei die in Umfangsrichtung gemessene Abmessung der Höcker an ihrem radial äußeren Ende kleiner als an ihrem radial inneren Ende (an dem der volle Zahn 40 anfängt) ist. Die äußeren, sich in Umfangsrichtung erstreckenden Flanken der Höcker 48, 52 sind in sich flach oder entsprechend dem Radius des Hüllkreises der Zähne 40 kreisförmig.

Die Höcker 48, 50 und die Vertiefung 52 bilden demnach (neben einer ersten, an der vorlaufenden Flanke 44 des Zahns 40 und des vorlaufenden Höckers 50 gebildeten, ersten Kante) an der vorlaufenden Flanke des nachlaufenden Höckers 48 eine zweite Kante, die zum Anschlagen der Körner im von der Konditionierwalze 28, 28' bearbeiteten Erntegut beiträgt.

Die Ausführungsform der Figur 4 entspricht im Wesentlichen jener nach Figur 3, jedoch sind die Vertiefungen 52 U- oder bogenförmig im Querschnitt. Zudem sind sie in Umfangsrichtung kürzer als die Vertiefungen 52 der Ausführungsform nach Figur 3.

Die Ausführungsform der Figur 5 entspricht im Wesentlichen jener nach Figur 4, jedoch sind die Vertiefungen 52 tiefer als die Vertiefungen 52 der Ausführungsform nach Figur 4.

Die Ausführungsform der Figur 6 entspricht im Wesentlichen jener nach Figur 4, jedoch sind die Vertiefungen 52 flacher als die Vertiefungen 52 der Ausführungsform nach Figur 4.

Die Ausführungsform der Figur 7 entspricht im Wesentlichen jener nach Figur 3, jedoch ist der Höcker 50 kleiner als der Höcker 48 und die Vertiefung 52 hat eine vorlaufende, sich vom vorlaufenden Höcker 50 relativ flach nach innen erstreckende Flanke und eine nachlaufende, relativ steil nach außen zum Höcker 48 ansteigende Flanke.

Die Ausführungsform der Figur 8 entspricht im Wesentlichen jener nach Figur 7, jedoch ist der nachlaufende Höcker 48 niedriger und schmaler.

Bei der Ausführungsform nach Figur 9 sind der vorlaufende Höcker 50 und die Vertiefung 52 entfallen. Der nachlaufende Höcker 48 bildet mit seiner vorlaufenden Flanke 56 eine Stufe, die ebenfalls zum Anschlagen der Körner dient.

Einer oder mehrere der Zähne 40 der Walzenmantel 38 kann, wie in der Figur 3 beispielhaft gezeigt, mit einer sich axial über einen Teil oder die gesamte Länge des Zahns 40 erstreckenden Verschleißmarkierung 54 in Form einer Kerbe oder Nut ausgestattet sein. Der Benutzer kann anhand einer fehlenden Verschleißmarkierung erkennen, dass ein ggf. verschlissener Walzenmantel 38 bzw. die ganze Konditionierwalze 28, 28' auszutauschen ist. Die Verschleißmarkierung 54 kann auch unabhängig von der Zahnform verwendet werden, d.h. auch bei Zähnen 40 beliebigen, z.B. dreieckigen oder sägezahnförmigen oder trapezförmigen Querschnitts verwendet werden.

Um den Verschleiß der Zähne 40 zu vermindern, können sie insgesamt oder besonders vom Verschleiß betroffene Bereiche (z.B. die Flanken 42, 44, Höcker 48, 50 (oder ihre äußeren Oberseiten oder Spitzen), Radien, Absätze, Vertiefungen 52, jeweils komplett oder teilweise mit einer Verschleißschutzbeschichtung ausgestattet sein. Es können die Zähne 40 oder die erwähnten Bereiche auch alternierend mit der Verschleißschutzbeschichtung ausgestattet sein, d.h. einige Zähne 40 unbeschichtet bleiben. Die Vertiefungen 52 können, wie in den Figuren gezeigt, als (gefräste) Nut ausgebildet sein, oder sie werden als zylindrische oder konische Bohrungen oder gefräste Nuten ausgeführt, d.h. zwischen den Vertiefungen 52 bleibt in axialer Richtung das ursprüngliche Material der Zähne 40 stehen.

Es sind auch beliebige Mischformen möglich, bei denen an einem einzigen Walzenmantel 38 in axialer Richtung und/oder Umfangsrichtung unterschiedlich geformte Zähne 40 aufeinander folgen. So könnten Zähne 40 einer der Figuren 3 bis 9 mit Zähnen 40 z.B. einer anderen der Figuren 3 bis 9 oder mit einer üblichen Zahnform ohne Stufe und Vertiefung in Umfangsrichtung alternieren, oder sogar drei oder mehr Zahnformen sich abwechseln. Es ist auch denkbar, die Zahnform in der beschriebenen Weise in axialer Richtung zu variieren, d.h. einen Teil der Länge der Zähne 40 mit einer ersten Form gemäß einer der Figuren 3 bis 9 zu versehen und über einen anderen Teil mit einer anderen Form (z.B. einer der Figuren 3 bis 9 oder mit einer üblichen Zahnform ohne Stufe und Vertiefung) zu versehen.

Schließlich wäre es denkbar, die erste Konditionierwalze 28 nach einer der vorhergehend diskutierten Figuren auszuführen und die zweite Konditionierwalze 28' mit einer üblichen Verzahnung, die sich axial oder wendeiförmig erstreckt, auszustatten, oder die zweite Konditionierwalze 28' mit einer Verzahnung nach einer anderen der vorhergehend diskutierten Figuren zu versehen.

## Patentansprüche

1. Feldhäcksler (10) mit einer Häckseltrommel (22) und einer aus zwei zusammenwirkenden Konditionierwalzen (28, 28') aufgebauten, stromab der Häckseltrommel (22) angeordneten Konditioniereinrichtung, wobei die Konditionierwalzen (28, 28') jeweils mit einem Walzenmantel (38) versehen sind, welcher eine Anzahl um seinen Umfang verteilter, sich in axialer Richtung des Walzenmantels (38) oder wendeiförmig um den Walzenmantel (38) erstreckender Zähne (40) umfasst, die jeweils eine in Umfangsrichtung vorlaufende, nach außen ansteigende Flanke (44), eine in Umfangsrichtung nachlaufende, nach innen abfallende Flanke (42) und dazwischen einen äußeren, sich entlang der Umfangsrichtung erstreckenden Bereich (46) umfassen, **dadurch gekennzeichnet, dass** der äußere Bereich (46) der Zähne (40) einer oder beider Konditionierwalzen (28, 28') wenigstens eine Vertiefung (52) und/oder Stufe beinhaltet, deren radiale Abmessung kleiner als die der Flanken (42, 44) ist.

2. Feldhäcksler (10) nach Anspruch 1, wobei die Vertiefung (52) einen rechteckigen oder trapezförmigen oder bogenförmigen oder dreieckigen oder sägezahnartigen Querschnitt oder eine Kombination daraus aufweist.

3. Feldhäcksler (10) nach Anspruch 1 oder 2, wobei der äußere Bereich (46) zwei äußere Höcker (48, 50) umfasst, zwischen denen die Vertiefung (52) angeordnet ist und die Außenflächen der äußeren Höcker (48, 50) in Umfangsrichtung in sich flach oder spitz sind.

4. Feldhäcksler (10) nach Anspruch 3, wobei die Höcker (48, 50) zueinander symmetrisch oder unsymmetrisch sind.

5. Feldhäcksler (10) nach Anspruch 4, wobei der vorlaufende Höcker (50) höher oder niedriger und/oder breiter oder schmaler und/oder spitzer oder stumpfer als der nachlaufende Höcker (48) ist.

6. Feldhäcksler (10) nach einem der vorherigen Ansprüche, wobei die vorlaufende und nachlaufende Flanke (44, 42) einen Stumpf eines Dreiecks oder Sägezahns oder Rechtecks bilden.

7. Feldhäcksler (10) nach einem der vorherigen Ansprüche, wobei wenigstens einer der Zähne (40) mit einer Verschleißmarkierung (54) versehen ist.

8. Feldhäcksler (10) nach Anspruch 7, wobei die Verschleißmarkierung (54) eine Kerbe ist.

## Claims

1. Forage harvester (10) having a chopping drum (22) and a conditioning device constructed from two cooperating conditioning rollers (28, 28') and arranged downstream of the chopping drum (22), wherein the conditioning rollers (28, 28') are each provided with a roller shell (38), which comprises a number of teeth (40) that are distributed around its circumference and extend in an axial direction of the roller shell (38) or helically around the roller shell (38), said teeth (40) each comprising an outwardly rising flank (44) leading in the circumferential direction, an inwardly falling flank (42) trailing in the circumferential direction, and, in between, an outer region (46) extending along the circumferential direction, **characterized in that** the outer region (46) of the teeth (40) of one or both conditioning rollers (28, 28') contains at least one recess (52) and/or step, the radial dimension of which is smaller than that of the flanks (42, 44).

2. Forage harvester (10) according to Claim 1, wherein the recess (52) has a rectangular or trapezoidal or arcuate or triangular or sawtooth-like cross section or a combination thereof.

3. Forage harvester (10) according to Claim 1 or 2, wherein the outer region (46) comprises two outer cusps (48, 50), between which the recess (52) is arranged, and the outer faces of the outer cusps (48, 50) are flat or pointed per se in the circumferential direction.

4. Forage harvester (10) according to Claim 3, wherein the cusps (48, 50) are mutually symmetric or asymmetric.

5. Forage harvester (10) according to Claim 4, wherein the leading cusp (50) is taller or shorter and/or wider or narrower and/or more pointed or blunter than the trailing cusp (48).

6. Forage harvester (10) according to one of the preceding claims, wherein the leading and trailing flank (44, 42) form a frustum of a triangle or sawtooth or rectangle.

7. Forage harvester (10) according to one of the preceding claims, wherein at least one of the teeth (40) is provided with a wear marking (54).

8. Forage harvester (10) according to Claim 7, wherein the wear marking (54) is a notch.

## Revendications

1. Ramasseuse-hacheuse (10), comprenant un tambour de hachage (22) et un dispositif de conditionnement composé de deux rouleaux de conditionnement (28, 28') coopérants et disposé en aval du tambour de hachage (22), les rouleaux de conditionnement (28, 28') étant respectivement pourvus d'une enveloppe de rouleau (38) qui comprend un nombre de dents (40) réparties sur sa circonférence et s'étendant dans la direction axiale de l'enveloppe de rouleau (38) ou en forme de spirale autour de l'enveloppe de rouleau (38) et qui comprennent respectivement un flanc (44) avançant dans la direction circonférentielle et montant vers l'extérieur, un flanc (42) suivant dans la direction circonférentielle et descendant vers l'intérieur, et entre ceux-ci une zone extérieure (46) s'étendant le long de la direction circonférentielle,
**caractérisée en ce que** la zone extérieure (46) des dents (40) d'un ou des deux rouleaux de conditionnement (28, 28') comporte au moins un creux (52) et/ou un gradin dont la dimension radiale est inférieure à celle des flancs (42, 44).

2. Ramasseuse-hacheuse (10) selon la revendication 1, dans laquelle le creux (52) présente une section transversale rectangulaire ou trapézoïdale ou en forme d'arc ou triangulaire ou en dents de scie ou une combinaison de ces formes.

3. Ramasseuse-hacheuse (10) selon la revendication 1 ou 2, dans laquelle la zone extérieure (46) comprend deux bosses extérieures (48, 50) entre lesquelles est disposé le creux (52), et les surfaces extérieures des bosses extérieures (48, 50) sont aplaties ou pointues dans la direction circonférentielle.

4. Ramasseuse-hacheuse (10) selon la revendication 3, dans laquelle les bosses (48, 50) sont symétriques ou asymétriques les unes par rapport aux autres.

5. Ramasseuse-hacheuse (10) selon la revendication 4, dans laquelle la bosse avant (50) est plus haute ou plus basse et/ou plus large ou plus étroite et/ou plus pointue ou plus aplatie que la bosse arrière (48).

6. Ramasseuse-hacheuse (10) selon l'une quelconque des revendications précédentes, dans laquelle le flanc avant et le flanc arrière (44, 42) forment un tronc d'un triangle ou d'une dent de scie ou d'un rectangle.

7. Ramasseuse-hacheuse (10) selon l'une quelconque des revendications précédentes, dans laquelle au moins l'une des dents (40) est munie d'un repère d'usure (54) .

8. Ramasseuse-hacheuse (10) selon la revendication 7, dans laquelle le repère d'usure (54) est une encoche.
